# EUROPEAN PATENT APPLICATION

(11) **EP 4 657 551 A1**
(43) Date of publication of application: **03.12.2025**
(21) Application number: 24747129.5
(22) Date of filing: 12.01.2024
(51) Int. Cl.: H01M 4/139, H01M 4/04

(54) **MIXTURE SHEET FORMING APPARATUS**

(30) Priority: 24.01.2023 JP 2023008694
(71) Applicant: Panasonic Energy Co., Ltd., Osaka 570-8511 (JP)
(72) Inventor: TOMITA, Yosuke, Osaka 571-0057 (JP); YAMASHITA, Hiroki, Osaka 571-0057 (JP); TAKAYAMA, Yosuke, Osaka 571-0057 (JP); MAEDA, Satoru, Osaka 571-0057 (JP)
(74) Representative: Eisenführ Speiser
(86) International application number: PCT/JP2024/000562
(87) International publication number: WO 2024/157798

(57) **Abstract**

This mixture sheet forming apparatus 1 is provided with: a storage section 2 for a dry electrode mixture 8; a sizing section 4 which deagglomerates aggregates 8a of the dry electrode mixture 8 contained in the storage section 2; and a molding section 6 which has a first forming roll 16 and a second forming roll 18 that are adjacent to each other with a predetermined space therebetween and is configured such that the dry electrode mixture 8 that has undergone a deagglomeration treatment in the sizing section 4 is supplied to a gap formed between the two rolls and the dry electrode mixture 8 is compressed in a sheet-like shape, thereby forming a mixture sheet 10.

## Description

### TECHNICAL FIELD

The present disclosure relates to a compound sheet molding apparatus.

### BACKGROUND ART

Patent Literature 1 describes a powder film deposition apparatus including a pair of rolls and a partitioned part that stores an agglomerated material (electrode compound) containing an electrode active material. In this powder film deposition apparatus, an electrode compound is drawn from the partitioned part to a space between the rolls according to the rotation of the pair of rolls, and a film sheet (compound sheet) is molded as the pair of rolls roll the electrode compound.

### RELATED-ART LITERATURE

### PATENT LITERATURE

[Patent Literature 1] JP 2018-113112

### SUMMARY OF INVENTION

### TECHNICAL PROBLEM

In the case a compound sheet is molded by a pair of rolls from an electrode compound, it is desirable to improve the molding stability of the compound sheet. In the case the electrode compound is of a dry type, in particular, improvement in molding stability is strongly desired.

The present disclosure addresses the issue described above, and a purpose thereof is to provide a technology for improving the molding stability of a compound sheet.

### SOLUTION TO PROBLEM

An embodiment of the present disclosure relates to a compound sheet molding apparatus. The apparatus includes: a reservoir of a dry electrode compound; a granulation unit that crushes an aggregate of the dry electrode compound contained in the reservoir; and a molding unit that includes a first molding roll and a second molding roll adjacent to each other at a predetermined interval, the dry electrode compound crushed by the granulation unit being supplied to a gap between the first and second molding rolls, and the molding unit compressing the dry electrode compound into a sheet shape to mold a compound sheet.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the molding stability of a compound sheet can be improved.

### BRIEF DESCRIPTION OF DRAWINGS

[Fig. 1] Fig. 1 is a schematic diagram of a compound sheet molding apparatus according to the embodiment.
[Fig. 2] Figs. 2A and 2B show variations of the granulation unit.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

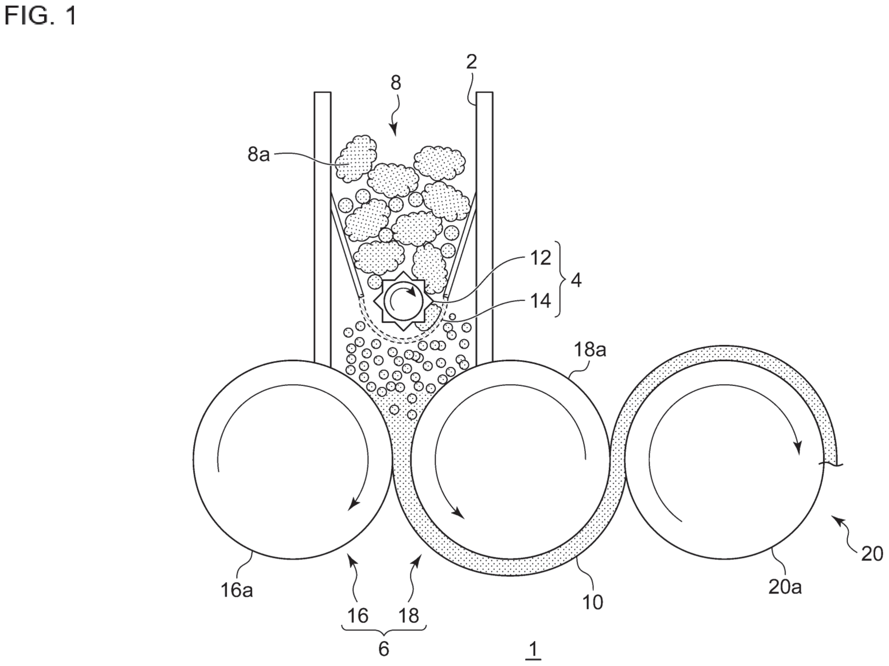

Fig. 1 is a schematic diagram of a compound sheet molding apparatus 1 according to the embodiment. The compound sheet molding apparatus 1 includes a reservoir 2, a granulation unit 4, and a molding unit 6. The reservoir 2 is, for example, a known hopper and stores a powdery or particulate dry electrode compound 8 that is a raw material of the compound sheet 10.

The dry electrode compound 8 includes an electrode active material and a binder. The dry electrode compound also includes a conductive agent and a solvent as necessary. The binder and the solvent function as binder content that binds the electrode active materials to each other. In the case of a general lithium ion secondary battery, the electrode active material is lithium cobalt oxide, lithium iron phosphate, etc. in the case of a positive electrode and is graphite, etc. in the case of a negative electrode. The conductive agent is graphite, carbon black, acetylene black, etc. The binder is polytetrafluoroethylene (PTFE), polyvinylidene fluoride (PVdF), etc.

In the case the dry electrode compound 8 is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the dry electrode compound 8 is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide solvent such as dimethylacetamide and N-methyl-2-pyrrolidone, etc.

The term "dry" in the embodiment means that the solvent content is 10% by mass or less with respect to the total mass of the dry electrode compound 8. The solvent content may be 5% by mass or less, 3% by mass or less, 0.1% by mass, or substantially 0% by mass with respect to the total mass of the dry electrode compound 8. By using the dry electrode compound 8, a drying furnace for drying the compound sheet 10 can be simplified or omitted.

The electrode compound has an agglomerating property because it contains a binding content. In the dry electrode compound 8 having a small solvent content, in particular, a binder having a relatively strong binding force can be employed to stably maintain the bonding state between the electrode active materials. As the binding force of the binder increases, the electrode compound aggregates more easily. For this reason, an aggregate 8a of the dry electrode compound 8 is likely to be produced in the reservoir 2. When the aggregate 8a in an agglomerated state is produced, the supply of the dry electrode compound 8 from the reservoir 2 to the molding unit 6 becomes unstable, and the molding stability of the compound sheet 10 could be lowered.

Meanwhile, the compound sheet molding apparatus 1 of the embodiment includes a granulation unit 4 in the middle of the path of the dry electrode compound 8 from the reservoir 2 to the molding unit 6. The granulation unit 4 crushes the aggregate 8a contained in the reservoir 2 and returns the dry electrode compound 8 to a powdery state. The molding unit 6 is supplied with the dry electrode compound 8 that has been crushed by the granulation unit 4. This makes it possible to stably supply the dry electrode compound 8 to the molding unit 6. As a result, the molding stability of the compound sheet 10 can be increased. Further, the homogeneity of the compound sheet 10 molded can be increased. Further, by providing the granulation unit 4, the dry electrode compound 8 containing the aggregate 8a can be input to the reservoir 2 even if the aggregate 8a is produced while the dry electrode compound 8 is stored in a container, etc. Therefore, the manufacturing process of the compound sheet 10 can be simplified.

The granulation unit 4 according to one example includes a crushing roll 12 having a crushing blade on the circumferential surface thereof and a screen 14. The crushing roll 12 and the screen 14 are adjacent to each other at a predetermined interval. As the crushing roll 12 is rotated, the aggregate 8a in the reservoir 2 is drawn to a space between the crushing roll 12 and the screen 14 and pressed against the screen 14. The screen 14 is comprised of, for example, a perforated plate such as a metal mesh, a perforated metal, or an expanded metal. The aggregate 8a is pressed against the screen 14, crushed into a powder, and passes through the screen 14 in a powdery state. The dry electrode compound 8 that has passed through the screen 14 is delivered to the molding unit 6.

The crushing mechanism provided in the granulation unit 4 is not limited to the combination of the crushing roll 12 and the screen 14. For example, the granulation unit 4 may consist only of the crushing roll 12 or only of the screen 14. Further, the granulation unit 4 may be comprised of a known crushing mechanism such as a vibrating sieve machine, a roll mill, a hammer mill, a pin mill, and a cutter mill. Further, the reservoir 2 and the granulation unit 4 may have an integral structure.

The molding unit 6 compresses the dry electrode compound 8 passing through the granulation unit 4 into a sheet shape to mold the compound sheet 10. The molding unit 6 includes a first molding roll 16 and a second molding roll 18. By way of one example, the first molding roll 16 and the second molding roll 18 are disposed immediately below the granulation unit 4. The first molding roll 16 and the second molding roll 18 are oriented such that the respective rotation axes are parallel to each other, and are adjacent to each other at a predetermined interval. The second molding roll 18 is disposed further downstream in the conveying direction of the compound sheet 10 than the first molding roll 16.

The first molding roll 16 and the second molding roll 18 carry the dry electrode compound 8 on their respective circumferential surfaces and supply it to the gap between the two rolls. Therefore, the first molding roll 16 and the second molding roll 18 also function as feed rolls. The first molding roll 16 and the second molding roll 18 rotate in mutually opposite directions and compress the dry electrode compound 8 supplied to the gap into a sheet shape. Thereby, the compound sheet 10 is formed. The compound sheet 10 is continuously fed from the gap between the first molding roll 16 and the second molding roll 18. Therefore, the compound sheet 10 is a strip elongated in the conveying direction.

Further, the first molding roll 16 and the second molding roll 18 of the embodiment differ from each other in the surface roughness of the respective circumferential surfaces, differ in the circumferential speed of the rolls, or differ in both. In the case the surface roughness of the circumferential surface differs, a circumferential surface 16a of the first molding roll 16 has a first surface roughness, and a circumferential surface 18a of the second molding roll 18 has a second surface roughness greater than the first surface roughness. When the circumferential speed differs, the first molding roll 16 rotates at the first circumferential speed, and the second molding roll 18 rotates at the second circumferential speed faster than the first circumferential speed. Due to the difference in surface roughness or the difference in circumferential speed, the compound sheet 10 molded by the first molding roll 16 and the second molding roll 18 is supported by the circumferential surface 18a of the second molding roll 18 while being stretched and is conveyed to the downstream side.

The compound sheet molding apparatus 1 of the embodiment includes a stretching roll 20 on the downstream side of the conveyance direction of the compound sheet 10 with respect to the second molding roll 18. The stretching roll 20 is oriented such that the rotation axis thereof is parallel to the rotation axis of the second molding roll 18, and is adjacent to the second molding roll 18 at a predetermined interval. The compound sheet 10 is guided through the gap between the second molding roll 18 and the stretching roll 20. The second molding roll 18 and the stretching roll 20 can convey the compound sheet 10 by sandwiching the compound sheet 10 between the rolls and rotating in mutually opposite directions.

Further, the second molding roll 18 and the stretching roll 20 rotate at mutually different circumferential speeds. Specifically, the circumferential speed of the stretching roll 20 is faster than the circumferential speed of the second molding roll 18. Alternatively, the second molding roll 18 and the stretching roll 20 differ from each other in the surface roughness of the respective circumferential surfaces. Specifically, the surface roughness of the circumferential surface 20a of the stretching roll 20 is greater than the surface roughness of the circumferential surface 18a of the second molding roll 18. The compound sheet 10 passing through the gap between the stretching roll 20 and the second molding roll 18 is stretched due to at least one of the difference in circumferential speed or the difference in surface roughness.

The compound sheet 10 is delivered to the side of the stretching roll 20 at a position where the second molding roll 18 and the stretching roll 20 face each other, is supported by the circumferential surface 20a, and is conveyed to the downstream side. One or more stretching rolls 20 may be further disposed on the downstream side of the stretching roll 20 adjacent to the second molding roll 18. Alternatively, a conveyance roll having only a conveying function without a stretching function may be disposed. Further, a lamiroll for conveying a substrate like a current collector plate and laminating the compound sheet 10 on the substrate may be disposed.

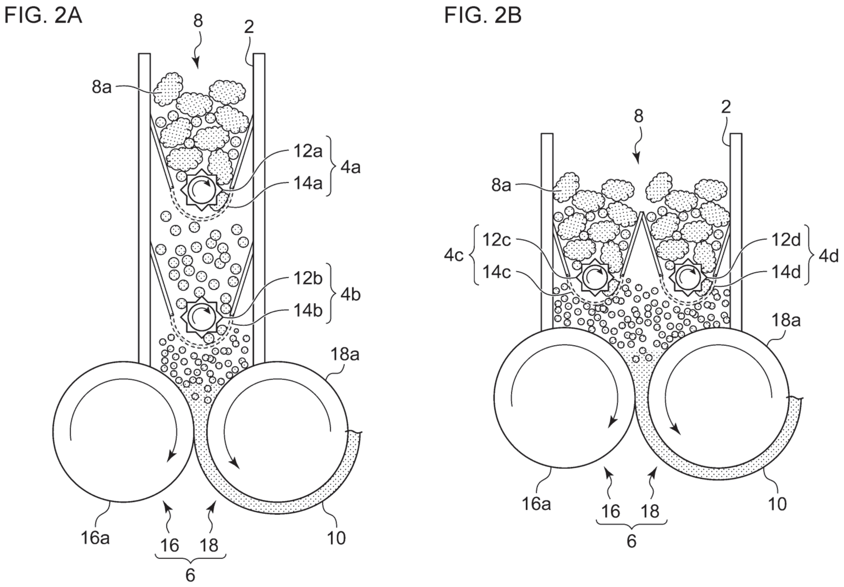

The following variations of the granulation unit 4 are possible. Figs. 2A and 2B show variations of the granulation unit 4. As shown in Fig. 2A, for example, the compound sheet molding apparatus 1 may be provided with a first granulation unit 4a and a second granulation unit 4b arranged in series in the middle of the path of the dry electrode compound 8 from the reservoir 2 to the molding unit 6. In this case, the dry electrode compound 8 in the reservoir 2 passes through the first granulation unit 4a and the second granulation unit 4b in this order and is supplied to the molding unit 6. According to such a configuration, the aggregate 8a can be more reliably crushed. Therefore, the molding stability of the compound sheet 10 can be further improved.

By way of one example, the first granulation unit 4a has a first crushing roll 12a and a first screen 14a, and the second granulation unit 4b has a second crushing roll 12b and a second screen 14b. The first screen 14a has a first aperture, and the second screen 14b has a second aperture smaller than the first aperture. According to such a configuration, the aggregate 8a can be coarsely crushed by the first granulation unit 4a and then finely crushed by the second granulation unit 4b. This can further increase the accuracy of granulation of the dry electrode compound 8.

As in the case of the above-described granulation unit 4, the crushing mechanism provided in the first granulation unit 4a and the second granulation unit 4b is not limited to the combination of a crushing roll and a screen. Further, the first granulation unit 4a and the second granulation unit 4b may be configured with different crushing mechanisms.

Further, as shown in Fig. 2B, the compound sheet molding apparatus 1 may include a third granulation unit 4c and a fourth granulation unit 4d arranged in parallel in the middle of the path of the dry electrode compound 8 from the reservoir 2 to the molding unit 6. In this case, a portion of the dry electrode compound 8 in the reservoir 2 is supplied to the molding unit 6 through the third granulation unit 4c, and the other portion is supplied to the molding unit 6 through the fourth granulation unit 4d. According to such a configuration, the processing amount of the granulation unit 4 per unit time can be increased. Therefore, the production throughput of the compound sheet 10 can be improved.

By way of one example, the third granulation unit 4c has a third crushing roll 12c and a third screen 14c, and the fourth granulation unit 4d has a fourth crushing roll 12d and a fourth screen 14d. The third screen 14c and the fourth screen 14d have the same aperture. As in the case of the above-described granulation unit 4, the crushing mechanism provided in the third granulation unit 4c and the fourth granulation unit 4d is not limited to the combination of a crushing roll and a screen. Further, the third granulation unit 4c and the fourth granulation unit 4d may be configured with different crushing mechanisms.

Further, three or more granulation units 4 may be arranged in series or in parallel. Further, a series arrangement and a parallel arrangement of the granulation unit 4 may be combined.

As described above, the compound sheet molding apparatus 1 according to the embodiment crushes the aggregate 8a of the dry electrode compound 8 by the granulation unit 4 and then supplies the crushed aggregate to the molding unit 6. This increases the stability of supply of the dry electrode compound 8 to the molding unit 6. As a result, the molding stability of the compound sheet 10 is improved, and molding defects of the compound sheet 10 can be reduced. Further, the quality of the compound sheet 10 can be enhanced. In the case of the dry electrode compound 8 in which a binder having a stronger binding force than in the case of a wet electrode compound is used, in particular, the aggregate 8a is formed more easily than in a wet electrode compound. Therefore, the compound sheet molding apparatus 1 of the embodiment can effectively exhibit its function particularly when the electrode compound is of a dry type. The molding stability of the compound sheet 10 can be improved according to the embodiment even when the electrode compound is of a wet type.

The embodiment of the present disclosure has been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiments may be defined by the following items.

### [Item 1]

A compound sheet molding apparatus (1) including:
a reservoir (2) of a dry electrode compound (8);
a granulation unit (4) that crushes an aggregate (8a) of the dry electrode compound (8) contained in the reservoir (2); and
a molding unit (6) that includes a first molding roll (16) and a second molding roll (18) adjacent to each other at a predetermined interval, the dry electrode compound (8) crushed by the granulation unit (4) being supplied to a gap between the first and second molding rolls (16, 18), and the molding unit (6) compressing the dry electrode compound (8) into a sheet shape to mold a compound sheet (10).

### [Item 2]

The compound sheet molding apparatus (1) according to Item 1,
wherein the second molding roll (18) supports and conveys the compound sheet (10) on a circumferential surface (18a) of the second molding roll (18), and
wherein the compound sheet molding apparatus (1) includes a stretching roll (20) that is adjacent to the second molding roll (18) at a predetermined interval and stretches the compound sheet (10) passing through a gap from the second molding roll (18).

### [Item 3]

The compound sheet molding apparatus (1) according to Item 1 or Item 2,
wherein the granulation unit (4) includes a first granulation unit (4a) and a second granulation unit (4b) arranged in series in the middle of a path of the dry electrode compound (8) from the reservoir (2) to the molding unit (6), and
wherein the dry electrode compound (8) in the reservoir (2) passes through the first granulation unit (4a) and the second granulation unit (4b) in this order and is supplied to the molding unit (6).

### [Item 4]

The compound sheet molding apparatus (1) according to Item 1 or Item 2,
wherein the granulation unit (4) includes a third granulation unit (4c) and a fourth granulation unit (4d) arranged in parallel in the middle of a path of the dry electrode compound (8) from the reservoir (2) to the molding unit (6), and
wherein a portion of the dry electrode compound (8) in the reservoir (2) is supplied to the molding unit (6) through the third granulation unit (4c), and the other portion is supplied to the molding unit (6) through the fourth granulation unit (4d).

### INDUSTRIAL APPLICABILITY

The present disclosure is applicable to a compound sheet molding apparatus.

### REFERENCE SIGNS LIST

1 compound sheet molding apparatus, 2 reservoir, 4 granulation unit, 4a first granulation unit, 4b second granulation unit, 4c third granulation unit, 4d fourth granulation unit, 6 molding unit, 8 dry electrode compound, 8a aggregate, 10 compound sheet, 16 first molding roll, 18 second molding roll, 20 stretching roll

## Claims

1. A compound sheet molding apparatus comprising:
a reservoir of a dry electrode compound;
a granulation unit that crushes an aggregate of the dry electrode compound contained in the reservoir; and
a molding unit that includes a first molding roll and a second molding roll adjacent to each other at a predetermined interval, the dry electrode compound crushed by the granulation unit being supplied to a gap between the first and second molding rolls, and the molding unit compressing the dry electrode compound into a sheet shape to mold a compound sheet.

2. The compound sheet molding apparatus according to Claim 1,
wherein the second molding roll supports and conveys the compound sheet on a circumferential surface of the second molding roll, and
wherein the compound sheet molding apparatus includes a stretching roll that is adjacent to the second molding roll at a predetermined interval and stretches the compound sheet passing through a gap from the second molding roll.

3. The compound sheet molding apparatus according to Claim 1 or 2,
wherein the granulation unit includes a first granulation unit and a second granulation unit arranged in series in the middle of a path of the dry electrode compound from the reservoir to the molding unit, and
wherein the dry electrode compound in the reservoir passes through the first granulation unit and the second granulation unit in this order and is supplied to the molding unit.

4. The compound sheet molding apparatus according to Claim 1 or 2,
wherein the granulation unit includes a third granulation unit and a fourth granulation unit arranged in parallel in the middle of a path of the dry electrode compound from the reservoir to the molding unit, and
wherein a portion of the dry electrode compound in the reservoir is supplied to the molding unit through the third granulation unit, and the other portion is supplied to the molding unit through the fourth granulation unit.
